## Europäisches Patentamt
## European Patent Office
## Office européen des brevets

(19)

(11) Veröffentlichungsnummer: **0 101 893**
**B1**

(12) # EUROPÄISCHE PATENTSCHRIFT

(45) Veröffentlichungstag der Patentschrift:
05.11.86

(21) Anmeldenummer: 83107141.0

(22) Anmeldetag: 21.07.83

(51) Int. Cl.⁴: **B 01 J 8/24,** C 08 F 8/20,
C 08 F 10/00, C 08 F 2/34

(54) Vorrichtung zur Umsetzung von Gasen mit Gasen oder Feststoffen zu temperaturempfindlichen Feststoffen in der Wirbelschicht.

(30) Priorität: 27.07.82 DE 3227932

(43) Veröffentlichungstag der Anmeldung:
07.03.84 Patentblatt 84/10

(45) Bekanntmachung des Hinweises auf die Patenterteilung:
05.11.86 Patentblatt 86/45

(84) Benannte Vertragsstaaten:
BE DE FR GB NL SE

(56) Entgegenhaltungen:
EP-A-0 004 966
EP-A-0 047 794
DE-B-1 140 179
FR-A-1 123 277
FR-A-1 566 971
US-A-3 880 116

(73) Patentinhaber: BASF Aktiengesellschaft, Carl-
Bosch- Strasse 38, D-6700 Ludwigshafen (DE)

(72) Erfinder: Bronstert, Klaus, Dr., Gartenstrasse 26,
D-6719 Carlsberg (DE)
Erfinder: Welker, Siegfried, Im Sotter 17, D-6719
Hettenleidelheim (DE)
Erfinder: Werther, Joachim, Dr., Tostedter Weg
39, D-2110 Buchholz 5 (DE)

## Beschreibung

Die vorliegende Erfindung betrifft eine Vorrichtung zur Umsetzung von Gasen mit Gasen oder Feststoffen zu temperaturempfindlichen Feststoffen in einem Wirbelschichtreaktor.

Die klassische Methode zur Ausbildung einer Wirbelschicht ist die Verwendung eines zylindrischen Schachtes von gleichbleibendem Querschnitt, der nach unten durch einen Tragboden zur Gasverteilung abgeschlossen ist.

Darüberhinaus sind Apparate bekannt, die sich nach oben konisch erweitern, in denen es möglich ist, wirbelnde Suspensionen stationär aufrecht zu erhalten, wobei auf Tragböden verzichtet werden kann.

Nachteile bisheriger, sich konisch nach oben erweiternder Wirbelapparaturen sind zum einen die extreme Empfindlichkeit auf Änderungen der Gasgeschwindigkeit sowie auf inhomogene Gasgeschwindigkeitsverteilungen im Einlauf des Apparates, und zum anderen das Problem der Unterbringung von innenliegenden Wärmeaustauschereinbauten.

Laufen in der Wirbelschicht exotherme Umsetzungen ab und ist der Feststoff temperaturempfindlich oder hitzeschmelzend, so führen Zonen inhomogener Materialbewegungen zu sogenannten hot spots und damit zu Agglomeraten und schließlich zum Zusammenbacken und Zusammenbruch der Wirbelschicht.

Es war daher die Aufgabe der vorliegenden Erfindung, eine Vorrichtung zu entwickeln, die die chemische Umsetzung temperaturempfindlicher sowie hitzeschmelzender Produkte in der Wirbelschicht ermöglicht, wobei zum einen die Ausbildung eines stationären Wirbelzustandes, zum anderen eine gleichmäßige Temperaturverteilung und Regelung im gesamten Wirbelbett gewährleistet werden.

Diese Aufgabe wird erfindungsgemäß dadurch gelöst, daß

a) der zylindrische Wirbelschichtreaktor ein konisches Unterteil besitzt, dessen Öffnungswinkel 20 bis 60° vorzugsweise 30 bis 50° beträgt, und die Einstellung des Gases über ein Rohrsystem mit gezielter Gleichrichtung erfolgt,

b) das konische Unterteil eine Einlochdüse besitzt, um die Einströmgeschwindigkeit des Gases in das konische Unterteil auf 5 bis 50 m/s anzuheben, wobei das Verhältnis der freien Querschnittsflächen von zylindrischem Reaktor und der Einlochdüse zwischen 500:1 und 20:1, vorzugsweise zwischen 300:1 und 30:1 liegt,

c) die Einlochdüse eine Abrißkante für die Gasströmung aufweist, hinter der hohe Strömungsturbulenzen im Randbereich des Unterteils entstehen, welche Ablagerungen von Feststoffpartikeln verhindern, wobei die exakte Geometrie der Einlochdüse dem jeweiligen Schüttgut und dem Gas angepaßt werden muß, und

d) zur Abführung von Reaktionswärme bzw. zur Temperierung der Wirbelschicht innenliegende Wärmeaustauscher im zylindrischen Reaktoroberteil angebracht sind.

Mit der erfindungsgemäßen Vorrichtung gelingt es, das Reaktorunterteil mit einem homogenen, drallfreien Gasstrom konstanter Geschwindigkeit zu beaufschlagen, was zu einer gleichmäßigen Durchwirbelung der Feststoffschüttung und zu einer innigen Materialbewegung, verbunden mit hohem Stoff- und Wärmeaustausch, im gesamten Wirbelreaktor führt.

Erst dadurch ist eine Steuerung des Reaktions- und Temperaturverlaufs über Wärmeaustauscher möglich, was bei temperaturempfindlichen oder hitzeschmelzenden Produkten unerläßlich ist.

Die erfindungsgemäße Vorrichtung wird bevorzugt zur Umsetzung von Gasen mit Gasen oder Feststoffen eingesetzt und erweist sich dann als besonders vorteilhaft, wenn diese Umsetzung mit einer Wärmeentwicklung oder mit einem Wärmeverbrauch verbunden ist und dabei ein vorgegebener zeitlicher Temperaturverlauf in der Wirbelschicht gefordert wird. Im einzelnen dient die erfindungsgemäße Vorrichtung zur Chlorierung von PVC und Polyethylen sowie zur Polymerisation von Ethylen und Propylen.

Die Erfindung wird nachstehend anhand der Zeichnung näher erläutert.

Es zeigen:

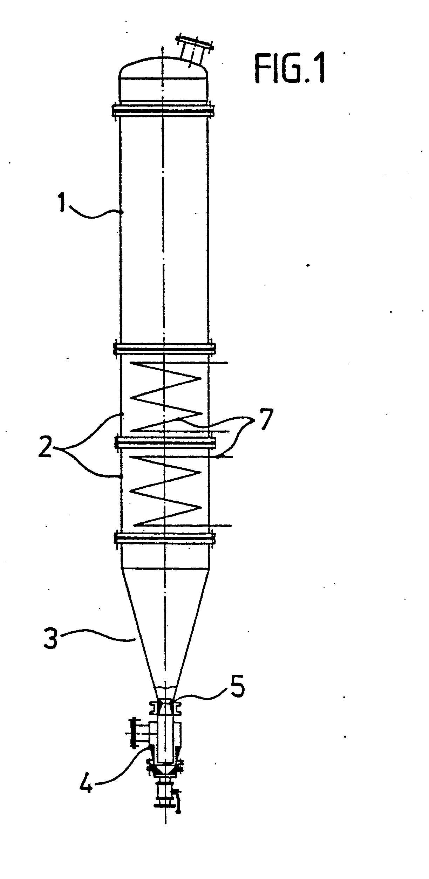

Figur 1 den Querschnitt durch den gesamten Wirbelreaktor mit allen wesentlichen Bauteilen

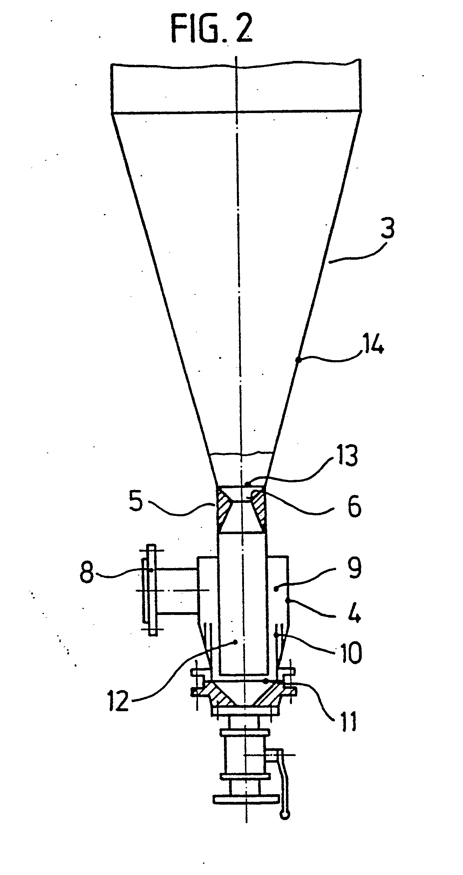

Figur 2 das Reaktorunterteil mit den Einbauten zur gezielten Gasführung

Das Trägergas gelangt über einen Gaseintrittsstutzen 8 in einen ringförmigen Strömungsquerschnitt 9, der sich nach unten konisch verjüngt. In einem Strömungsgleichrichter 10 werden vorhandene Rotations- und Drallströmungen des Gases unterdrückt. Zusammen mit der scharfen Umlenkung des Gases um 180° in einem Spalt 11 wird ein homogenes Geschwindigkeitsprofil des Gases in einem Einleitrohr 12 des Reaktorunterteils erzeugt.

In einer Einlochdüse 5 wird die Gaseinströmgeschwindigkeit auf das notwendige Niveau angehoben, das zur Ausbildung einer stabilen Wirbelschicht erforderlich ist. Die Düse 5 ist geometrisch so ausgebildet, daß sie eine Abrißkante 6 für die Gasströmung besitzt, um das Anlegen des Gases an die Reaktorwand 14 zu verhindern und Ablagerungen von Feststoffpartikeln im Düsenbereich 13 zu vermeiden. Dadurch werden Feststoffpfropfen und Materialtransport in Form von "Stoßsendungen" verhindert.

Zur Temperaturführung und Reaktionssteuerung sind im zylindrischen Bereich des Reaktors 2 Wärmeaustauscher 7 untergebracht.

In der erfindungsgemäßen Vorrichtung lassen sich Gase, wie Chlor, Ethylen u.a. mit Feststoffen wie Polyethylen und Polyvinylchlorid oder mit Gasen wie Ethylen umsetzen.

## Beispiel

Chlorierung von Polyvinylchlorid

Bei der Chlorierung von Polyvinylchloridpulver wird der Chlorgehalt des Polymeren um ca. 14 % angehoben, wobei pro Mol umgesetztes Chlor 27 kcal an Wärme freiwerden. Um die Reaktion mit technisch interessanter Reaktionsgeschwindigkeit abzuwickeln, müssen in der Wirbelschicht die Reaktionstemperaturen möglichst nahe am Feststofferweichungspunkt gehalten werden, ohne ihn zu erreichen, da sonst die Wirbelschicht zusammenbrechen würde.

Diese Problematik stellt an die Homogenität und Stabilität der Wirbelschicht höchste Anforderungen. Temperaturabweichungen innerhalb der Wirbelschicht um mehr als 2° führen zu hot spots, zu Agglomerationen und infolge mangelnder Wärmeabfuhr zu Produktzersetzungen und schließlich zu autokatalytischer Verkohlung des Materials.

Mit der erfindungsgemäßen Vorrichtung gelingt es, den Chlorgehalt des PVC innerhalb von 3 Stunden von 56,8 auf 66 Gew.% anzuheben, wobei die Temperaturabweichungen innerhalb der gesamten Wirbelschicht weniger als 1° C betragen.

Die Stabilität des Wirbelzustandes wurde über eine Differenzdruckerfassung kontrolliert und ein stabiles Fahren bestätigt.

Die Chlorierungsreaktion setzt bei einer Temperatur von ca. 80° C ein.

Mit zunehmendem Chlorgehalt im PVC kann die Temperatur schrittweise bis auf etwa 115° C hochgefahren werden, wobei das Temperaturprogramm dem Verlauf des Erweichungspunktes des chlorierten PVC angepaßt ist.

Das Reaktionsgas wird dabei im Kreis gefahren, wobei in einem Fliehkraftabscheider mitgerissene Feststoffpartikel abgeschieden und in den Reaktor zurückgeführt werden.

Die umgesetzte Chlormenge wird kontinuierlich durch Frischchlorzufuhr ersetzt, um eine konstante Chlor-Konzentration im Eintritt des Reaktors zu gewährleisten.

Nach Erreichen des gewünschten Chlorgehalts von 65 % wird das Reaktionsgas so lange durch Stickstoff ersetzt, bis im austretenden Gas keine Salzsäure mehr nachgewiesen werden kann. Nach Abkühlen wird das Produkt der Apparatur entnommen. Es weist eine rein weiße Farbe auf und zeichnet sich durch Freiheit von dunkelgefärbten Zersetzungsprodukten aus. Es besitzt eine Vicatzahl von 125° C und läßt sich nach Zusatz von Stabilisatoren zu Rohren extrudieren, die eine caramelfarbene Eigenfarbe besitzen.

## Patentansprüche

1. Vorrichtung zur Umsetzung von Gasen mit Gasen oder Feststoffen zu temperaturempfindlichen Feststoffen in einem Wirbelschichtreaktor, dadurch gekennzeichnet, daß

a) der zylindrische Wirbelschichtreaktor (1) ein konisches Unterteil (3) besitzt, dessen Öffnungswinkel 20° bis 60° vorzugsweise 30 bis 50 beträgt, und die Einleitung des Gases über ein Rohrsystem (4) mit gezielter Gasgleichrichtung erfolgt,

b) das konische Unterteil (3) eine Einlochdüse (5) besitzt, um die Einströmgeschwindigkeit des Gases auf 5 bis 50 m/s anzuheben, wobei das Verhältnis der freien Querschnittflächen von zylindrischem Reaktor (1) und der Einlochdüse (5) zwischen 500:1 und 20:1, vorzugsweise zwischen 300:1 und 30:1 liegt,

c) die Einlochdüse (5) eine Abrißkante (6) für die Gasströmung aufweist, hinter der hohe Strömungsturbulenzen im Randbereich des Unterteils entstehen, welche Ablagerungen von Feststoffpartikeln verhindern, wobei die exakte Geometrie der Einlochdüse (5) dem jeweiligen Schüttgut und dem Gas angepaßt werden muß, und

d) zur Abführung von Reaktionswärme bzw. zur Temperierung der Wirbelschicht innenliegende Wärmeaustauscher (7) im zylindrischen Reaktoroberteil (2) angebracht sind.

2. Verwendung der Vorrichtung gemäß Anspruch 1 zur Chlorierung von PVC-Pulver in der Wirbelschicht.

3. Verwendung der Vorrichtung gemäß Anspruch 1 zur Chlorierung von Polyethylen in der Wirbelschicht.

4. Verwendung der Vorrichtung gemäß Anspruch 1 zur Polymerisation von Ethylen in der Wirbelschicht.

5. Verwendung der Vorrichtung gemäß Anspruch 1 zur Polymerisation von Propylen in der Wirbelschicht.

## Claims

1. An apparatus for reacting a gas with a gas or a solid in a fluidized-bed reactor to give a heat-sensitive solid, wherein

a) the cylindrical fluidized-bed reactor (1) has a conical lower section (3) whose vertex angle is from 20 to 60°, preferably from 30 to 50°, and the gas is passed in, via a pipe system (4), with controlled flow rectification,

b) the conical lower section (3) has a single-jet nozzle (5) in order to increase the velocity of the inflowing gas to 5-50 m/s, the ratio of the free cross-sectional area of the cylindrical reactor (1) to that of the single-jet nozzle (5) being from 500:1 to 20:1, preferably from 300:1 to 30:1,

c) the single-jet nozzle (5) has a cut-off edge (6) for the stream of gas, behind which high turbulence occurs in the peripheral region of the lower section and prevents the deposition of solid particles, it being necessary to match the exact geometry of the nozzle (5) to the particular bulk material and the gas employed, and

d) heat exchangers (7) are provided inside the upper section (2) of the cylindrical reactor in order to conduct away the heat of reaction or to keep the fluidized bed at a specific temperature.

2. The use of an apparatus as claimed in claim 1 for the chlorination of PVC powder in the fluidized bed.

3. The use of an apparatus as claimed in claim 1 for the chlorination of polyethylene in the fluidized bed.

4. The use of an apparatus as claimed in claim 1 for the polymerization of ethylene in the fluidized bed.

5. The use of an apparatus as claimed in claim 1 for the polymerization of propylene in the fluidized bed.

**Revendications**

1. Appareil pour la réaction de gaz avec des gaz ou des matières solides, pour des matières solides sensibles à la température dans un réacteur à couche en mouvement turbulent, caractérisé par le fait que

a) le réacteur à couche en mouvement turbulent (1) cylindrique possède une partie inférieure conique (3), dont l'angle d'ouverture est de 20° à 60°, de préférence 30 à 50°, et l'introduction du gaz s'opère par l'intermédiaire d'un système tubulaire (4) à redressement de gaz orienté,

b) la partie inférieure (3) conique possède un gicleur à un seul orifice (5) pour relever la vitesse d'entrée du gaz à 5 à 50 m/s, le rapport entre les surfaces de section du réacteur cylindrique (1) et le gicleur à un orifice (5) est compris entre 500/l et 20/l, de préférence entre 300/l et 30/l

c) le gicleur à un orifice (5) possède une arête de décollement (6) pour le courant de gaz, derrière laquelle se produisent des turbulences de courant dans la zone d'extrémité de la partie inférieure, qui empêchent le dépôt de particules de matière solide, la géométrie exacte du gicleur à un orifice (5) devant être adaptée à la matière déversée et au gaz, et

d) des échangeurs de chaleur (7) intérieurs, prévus pour évacuer la chaleur de réaction ou mettre en équilibre de température la couche turbulente, sont montés dans la partie supérieure cylindrique (2) du réacteur.

2. Utilisation de l'appareil selon la revendication 1, pour chlorer du PVC en poudre dans la couche en mouvement turbulent.

3. Utilisation de l'appareil selon la revendication 1, pour chlorer du polyéthylène dans la couche en mouvement turbulent.

4. Utilisation de l'appareil selon la revendication 1, poue la polymérisation d'éthylène dans la couche en mouvement turbulent.

5. Utilisation de l'appareil selon la revendication 1, pour la polymérisation de propylène dans la couche en mouvement turbulent.

FIG.1

# FIG. 2